# EUROPÄISCHE PATENTSCHRIFT

(11) **EP 1 508 498 B1**
(45) Veröffentlichungstag und Bekanntmachung des Hinweises auf die Patenterteilung: **04.04.2007**
(21) Anmeldenummer: 04103626.0
(22) Anmeldetag: 28.07.2004
(51) Int. Cl.: B62D 5/00, B62D 5/04, B62D 5/09, B62D 5/06, B62D 5/065

(54) **Lenksystem für ein Kraftfahrzeug mit einer Servolenkeinrichtung**
Steering system for a vehicle with a power steering device
Système de direction pour un véhicule avec un dispositif de direction assistée

(30) Priorität: 06.11.2003 DE 10351768; 16.08.2003 DE 10337635; 19.08.2003 DE 10337954
(43) Veröffentlichungstag der Anmeldung: 23.02.2005
(73) Patentinhaber: Bayerische Motoren Werke Aktiengesellschaft, 80809 München (DE)
(72) Erfinder: Müller, Steffen, 81669 München (DE); Fleck, Reidar, 80995 München (DE)

(56) Entgegenhaltungen:
- DE-A1- 4 409 928
- DE-A1- 10 152 704
- DE-A1- 10 160 716
- DE-A1- 10 245 975
- US-A1- 2003 178 243

## Beschreibung

Die Erfindung betrifft ein Lenksystem für ein zweispuriges Kraftfahrzeug ach dem Oberbegriff des einzigen Patentanspruchs. Zum bekannten Stand der Technik wird beispielshalber auf die US 2003/0178243 A1 sowie auf die DE 198 19 404 A1 verwiesen.

Bei heutigen Kraftfahrzeugen wird eine Vielzahl unterschiedlicher Lenksysteme verwendet. Die einfachsten dieser Lenksysteme übertragen einen vom Fahrer an einer Lenkhandhabe in Gestalt eines Lenkrades vorgegebenen Lenkwinkel und ein vorgegebenes Handmoment ohne jegliche Kraft- oder Momenten-Unterstützung über ein Lenkgetriebe auf lenkbare Fahrzeugräder. Durchaus üblich sind heutzutage aber Lenksysteme mit einer Kraft- bzw. Momenten-Unterstützung bzw. Überlagerung.

Eine Momenten-Überlagerung können beispielsweise Servolenkungen vornehmen, bei denen mit Hilfe eines Servomotors an dem Lenkgetriebe des Lenksystems ein zusätzliches Servomoment eingeleitet wird. Wie bei unterstützungsfreien Lenksystemen üblich, bleibt bei der Überlagerung die Zuordnung zwischen dem Winkel der Lenkhandhabe und dem Winkel der Fahrzeugräder erhalten.

Das Servomoment wird üblicherweise mit einem hydraulischen Gleichlaufzylinder erzeugt, der mittels einer Lenkhilfepumpe mit Hydraulikfluid versorgt wird. Unterschieden werden bei solchen Servolenkeinrichtungen die weitverbreiteten Systeme mit hydraulisch offener Mitte ("Open-Center-Lenksystem") und andererseits die Systeme mit hydraulisch geschlossener Mitte ("Closed-Center-Lenksystem"). Bei Closed-Center-Lenksystemen wird im Gegensatz zu Open-Center-Lenksystemen ein Lenkventil, welches die Versorgung des Gleichlaufzylinders mit Hydraulikfluid steuert, in Mittelstellung der Lenkung nicht durchströmt, was energetisch vorteilhaft ist (vgl. hierzu die eingangs zweitgenannte DE 198 19 404 A1).

In der Kraftfahrzeugentwicklung werden zurzeit verstärkt Anstrengungen unternommen, mit einem Lenksystem eine so genannte Steer-by-Wire-Funktionalität zu erreichen. Dies bedeutet, dass an den lenkbaren Fahrzeugrädern auch ein von der Lenkvorgabe des Fahrers abweichender Lenkwinkel eingestellt werden kann, so wie dies beispielsweise aus der eingangs erstgenannten US 2003/0178243 A1 bekannt ist, nämlich unter Verwendung einer Überlagerungs-Lenkeinrichtung, mit der bspw. über ein Planetengetriebe dem vom Fahrer vorgegebenen Lenkwinkel mechanisch ein zusätzlicher positiver oder negativer Lenkwinkel hinzugefügt werden kann. Ferner ist es erwünscht, dass dem Fahrer an seiner Lenkhandhabe ein frei wählbares Unterstützungs- oder Gegenmoment zu dem von ihm eingebrachten Handmoment entgegengebracht werden kann, so dass der Fahrer gezielt eine vorbestimmte Rückmeldung an der Lenkhandhabe erhält.

Der Erfindung liegt die Aufgabe zugrunde ein serienfähiges Lenksystem mit voller Steer-by-Wire-Funktionalität bereitzustellen, bei dem in energetisch vorteilhafter Weise eine freie und unabhängige Regelung eines Radlenkwinkels und eines Handmomentes möglich sind.
Die Aufgabe ist für ein Lenksystem nach dem Oberbegriff des einzigen Patentanspruchs durch die kennzeichnenden Merkmale dieses Patentanspruchs gelöst.

Die Erfindung nutzt bei bekannten Lenksystemen vorhandene Lenkeinrichtungen und führt diesen gezielt neue und aufeinander abgestimmte Funktionen des Lenkens und des Simulierens von Lenkmomenten zu. Während bei bekannten Lenksystemen mit Hilfe der Servolenkeinrichtung das Bewegen von Fahrzeugrädern unterstützt wird, wird erfindungsgemäß die Servolenkeinrichtung zum Erzeugen eines für den Fahrer erlebbaren Handmomentes genutzt. Die Lenkwinkel der Fahrzeugräder werden mit Hilfe der Lenkhandhabe eingestellt, wobei über die Überlagerungslenkung beliebige Radlenkwinkel überlagert werden können.

Die Erfindung basiert dabei auf einer genauen Analyse der Nachteile bekannter Lenksysteme: Bekannte einfache, insbesondere als Open-Center-Lenksysteme, ausgebildete Zahnstangenhydrolenkungen ermöglichen weder eine freie und unabhängige Regelung eines Radlenkwinkels, noch eine freie und unabhängige Regelung eines Handmoments. Darüber hinaus ist bei solchen Zahnstangenhydrolenkungen der Kraftstoffverbrauchsanteil selbst bei engergiesparenden Lenkhilfepumpen vergleichsweise hoch. Bekannte elektrische Servolenkungen ermöglichen ebenfalls keine freie und unabhängige Regelung eines Radlenkwinkels. Darüber hinaus ist das Leistungsvermögen von elektrischen Servolenkungen durch die Leistungsfähigkeit heutiger elektrischer 14V-Bordnetze auf Kompakt- und Mittelklassefahrzeuge ohne variable Lenkübersetzung und ohne Steer-by-Wire-Funktionalität beschränkt. Auch elektro-hydraulische Servolenkungen ermöglichen keine unabhängige Regelung von Radlenkwinkel und Handmoment. Sie weisen ebenfalls ein beschränktes Leistungsvermögen auf. Bekannte Kombinationen einer Überlagerungslenkeinrichtung mit einer Servotronic-Zahnstangenhydrolenkung bzw. einer Zahnstangen-Servolenkeinrichtung ermöglichen ebenfalls keine freie und unabhängige Regelung des Handmoments. Die Überlagerungslenkung solcher Kombinationen verursacht überdies einen hohen Kraftstoffverbrauchsanteil, da vergleichsweise größere Lenkhilfepumpen erforderlich sind.

Erfindungsgemäß werden demgegenüber - aufbauend auf bekannten und bewährten Serien-Lenksystemen - einzelnen Teilsystemen gezielte Funktionsbereiche zugewiesen. So wird gemäß der Erfindung durch die gezielte Zuordnung der Funktionalitäten "Regelung des Handmoments" und "Regelung des Radlenkwinkels" volle Steer-by-Wire-Funktionalität geschaffen. Dabei ist die Überlagerungslenkeinrichtung mit einem Überlagerungsgetriebe unter Beibehaltung einer mechanischen Koppelung zwischen der Lenkhandhabe und dem Lenkgetriebe gestaltet. Mit der derartigen Überlagerungslenkung wird dem vom Fahrer eingestellten Handlenkwinkel ein zusätzlicher Lenkwinkel überlagert. Eine solche mechanische Koppelung ist insbesondere bei einem Ausfall der fremdgesteuerten Funktionen des erfindungsgemäßen Lenksystems aus sicherheitstechnischen Gründen wünschenswert.

Das erfindungsgemäße Lenksystem ist mit einer von einem Antriebsaggregat des Kraftfahrzeugs angetriebenen Pumpe versehen. Damit der für den Antrieb der Lenkhilfepumpe erforderliche Kraftstoffverbrauchsanteil vergleichsweise gering ist, sollte der Förderstrom der Pumpe bedarfsgerecht regelbar sein. Eine solche bedarfsgerechte Regelung kann besonders vorteilhaft mittels einer Kupplung zwischen Pumpe und dem Antriebsaggregat geschehen. Das Lenksystem ist ferner mit einem von einer Pumpe versorgten Druckspeicher versehen sein, so dass starke Druckschwankungen vermieden sind und das Lenksystem beispielsweise auch bei einem Stillstand des Antriebsaggregats des Kraftfahrzeugs zumindest über eine gewisse Zeitdauer wie gewünscht betrieben werden kann. Mit dieser Funktion können beispielsweise nach einem Einparken des Kraftfahrzeugs und einem Abstellen von dessen Antriebsmotor noch die Räder in Geradeaus-Stellung gelenkt werden. In energetisch vorteilhafter Weise arbeitet das Lenksystem nach dem Closed-Center-Prinzip mit einem vollständig absperrbaren Servoantrieb. Mit einer solchen Servolenkeinrichtung gemäß dem Closed-Center-Prinzip ist im Vergleich zu bekannten Zahnstangenhydrolenkungen eine erhebliche Verringerung des Kraftstoffverbrauchsanteils möglich. Bei einem Closed-Center-Lenksystem ermöglicht es ein Speicher, dass für eine bestimmte Zeit auch bei ausgeschalteter Servo-Pumpe mit Servo-Unterstützung gelenkt werden kann. Es können ferner hohe Lenkleistungen erbracht werden, so dass das Lenksystem für alle Fahrzeugtypen genutzt werden kann. Dabei kann das Absperren des Servoantriebs kann auf verschiedene vorteilhafte Arten, z.B. mit einem verstellbaren Wegeventil mit geringer Leckage in Neutralstellung oder mit einem Drehventil mit geringer Leckage in Neutralstellung erfolgen. Besonders vorteilhaft ist die Verwendung eines Sitzventils, welches dann als elektrisch verstellbares Sitzventil mit oder ohne hydraulische Vorsteuerung oder als Sitzventil mit elektrisch verstellbarer hydraulischer Vorsteuerung gestaltet sein kann.

Nachfolgend wird ein Ausführungsbeispiel eines erfindungsgemäßen Lenksystems anhand der beigefügten schematischen Zeichnungen näher erläutert. Es zeigt:

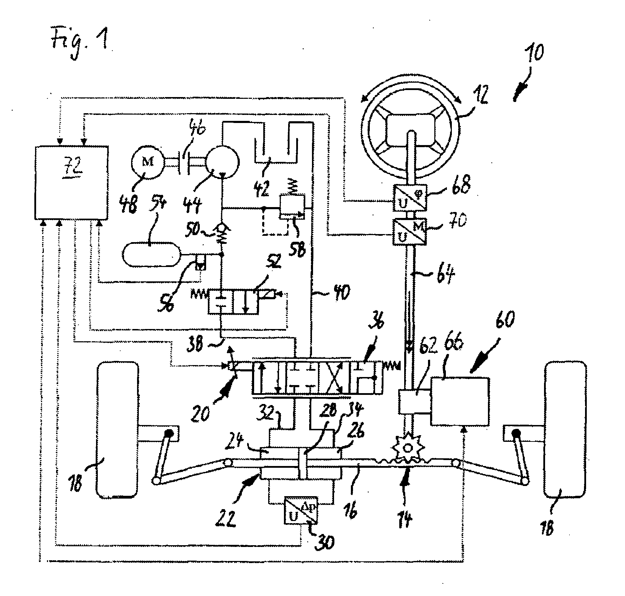

- Fig. 1: eine vereinfachte Darstellung eines erfindungsgemäßen Lenksystems.

In Fig. 1 ist eine Lenksystem 10 für ein weiter nicht veranschaulichtes Kraftfahrzeug in Gestalt eines Personenkraftwagens veranschaulicht.

Das Lenksystem 10 wird über eine Lenkhandhabe 12 in Form eines Lenkrades von einem Fahrer des Kraftfahrzeugs betätigt. Dabei wird von dem Fahrer grundsätzlich ein Handwinkel und ein Handmoment auf ein Lenkgetriebe 14 übertragen, von dem aus eine Zahnstange bzw. ein Lenkgestänge 16 betätigt und damit lenkbare Räder 18 des Kraftfahrzeugs bewegt werden.

Das Lenksystem 10 ist mit einer hydraulischen Servolenkeinrichtung 20 versehen, bei der an dem Lenkgestänge 16 ein Gleichlaufzylinder 22 mit einer ersten und einer zweiten Kammer 24 bzw. 26 für Hydraulikfluid vorgesehen ist. Zwischen den Kammern 24 und 26 ist ein verschiebbar gelagerter Kolben 28 angeordnet, der mit dem Lenkgestänge 16 kraftübertragend gekoppelt ist. In einer Verbindungsleitung zwischen den Kammern 24 und 26 ist eine Druckmesseinrichtung 30 angeordnet, um den Differenzdruck zwischen den Kammern 24 und 26 zu ermitteln.

Aus der ersten Kammer 24 ist eine erste hydraulische Leitung 32 und aus der zweiten Kammer 26 eine zweite hydraulische Leitung 34 zu einem elektromagnetisch fernsteuerbaren 4/4-Wegeventil 36 geführt. An dem 4/4-Wegeventil 36 sind ferner eine dritte hydraulische Leitung 38 sowie eine vierte hydraulische Leitung 40 angeschlossen. Die hydraulische Leitung 40 ist zu einem Vorratsbehälter 42 geführt, während an der Leitung 38 mittels einer Lenkhilfepumpe 44 in Gestalt einer Konstantpumpe oder einer Verstellpumpe bedarfgerecht hydraulischer Druck erzeugt werden kann.

Die Lenkhilfepumpe 44 wird dazu über eine fernsteuerbar zu betätigende Kupplung 46 von einem Antriebsaggregat 48 in Form eines Verbrennungsmotors des Kraftfahrzeugs angetrieben. Die Lenkhilfepumpe 44 saugt dann aus dem oben erwähnten Vorratsbehälter 42 Hydaulikfluid an und fördert dieses durch ein Rückschlagventil 50 zu einem elektromagnetisch fernsteuerbaren Absperrventil 52. Vor dem Absperrventil 52 zweigt eine hydraulische Leitung zu einem Druckspeicher 54 ab, an der ferner einer Drucksensor 56 angeordnet ist. Bei geschlossenem Absperrventil 52 wird daher vorwiegend der Druckspeicher 54 mit Hydraulikfluid versorgt, während bei offenem Absperrventil 52 in der dritten Leitung 38 Druck bereitgestellt wird. An der Druckseite der Lenkhilfepumpe 44 ist ferner ein Überdruckventil 58 angeordnet, welches durch eine zugehörige hydraulische Leitung zu der vierten Leitung 40 und damit zum Vorratsbehälter 42 führt.

Neben der Servolenkeinrichtung 20 ist bei dem Lenksystem 10 ferner eine Überlagerungslenkeinrichtung 60 vorgesehen, die insbesondere mittels eines Überlagerungsgetriebes 62 ausgebildet ist. Das Überlagerungsgetriebe 62 ist in einer Lenksäule 64 zwischen der Lenkhandhabe 12 und dem Lenkgetriebe 14 zwischengeschaltet und wird von einem Elektromotor 66 angetrieben.

Als weitere Bauelemente sind an dem Lenksystem 10 im Bereich der Lenksäule 64 eine Winkelmesseinrichtung 68 und eine Momentenmesseinrichtung 70 sowie ein elektronisches Steuergerät 72 vorgesehen. Das Steuergerät 72 ist über gestrichelt dargestellte Leitungen insbesondere mit den Messeinrichtungen 68 und 70, der Druckmesseinrichtung 30, dem Drucksensor 56 sowie dem 4/4-Wegeventil 36 und dem Absperrventil 52 betrieblich verbunden.

Mit dem Lenksystem 10 und der zugehörigen Servolenkeinrichtung 20 sowie der Überlagerungslenkeinrichtung 60 ist insgesamt eine volle Steer-by-Wire-Funktionalität auf der Basis eines Closed-Center-Servosystems realisiert. Bei dem Lenksystem 10 wird dazu mit dem Überlagerungslenksystem 60 ein auf der Grundlage der an den Messeinrichtungen 68 und 70 ermittelten Winkel- und Momentenwerte sowie auf Basis weiterer fahrdynamischer Größen des zu steuernden Kraftfahrzeugs mit dem Steuergerät 72 ein erforderlicher Lenkwinkel vorbestimmt. Der Lenkwinkel wird dann durch entsprechende Einflussnahme auf die Überlagerungslenkeinrichtung 60 und deren Überlagerungsgetriebe 62 eingestellt.
Um zugleich dem Fahrer des Fahrzeugs ein vom eingestellten Radlenkwinkel unabhängiges Handmoment in Form eines Unterstützungs- oder Gegenmoments vorgeben zu können, wird durch das Steuergerät 72 und die Servolenkeinrichtung 20 sowie deren Gleichlaufzylinder 22 eine Kraft an dem Lenkgetriebe 14 erzeugt, die dann über die Lenksäule 64 als Handmoment an den Fahrer übermittelt wird.

Bei dieser Steuerung bzw. Regelung des Lenksystems 10 wird die Servolenkeinrichtung 20 gemäß dem Closed-Center-Prinzip betrieben, so dass die Lenkhilfepumpe 44 jeweils bedarfsgerecht in den Druckspeicher 54 oder die dritte Leitung 38 fördert und ansonsten möglichst stillgesetzt wird. Auf diese Weise kann das Lenksystem 10 insgesamt mit einem vergleichsweise niedrigem Kraftstoffverbrauchsanteil betrieben werden.

### Bezugszeichenliste:

- 10: Lenksystem
- 12: Lenkhandhabe
- 14: Lenkgetriebe
- 16: Lenkgestänge
- 18: Rad
- 20: Servolenkeinrichtung
- 22: Gleichlaufzylinder
- 24: erste Kammer
- 26: zweite Kammer
- 28: Kolben
- 30: Druckmesseinrichtung
- 32: erste Leitung
- 34: zweite Leitung
- 36: 4/4-Wegeventil
- 38: dritte Leitung
- 40: vierte Leitung
- 42: Vorratsbehälter
- 44: Lenkhilfepumpe
- 46: Kupplung
- 48: Antriebsaggregat
- 50: Rückschlagventil
- 52: Absperrventil
- 54: Druckspeicher
- 56: Drucksensor
- 58: Überdruckventil
- 60: Überlagerungslenkeinrichtung
- 62: Überlagerungsgetriebe
- 64: Lenksäule
- 66: Elektromotor
- 68: Winkelmesseinrichtung
- 70: Momentenmesseinrichtung
- 72: Steuergerät

## Patentansprüche

1. Lenksystem (10) für ein insbesondere zweispuriges Kraftfahrzeug mit einer Lenkhandhabe (12) zum Vorgeben eines Handmoments eines Fahrers des Kraftfahrzeugs an einem Lenkgetriebe (14), welches zum Einstellen eines Radlenkwinkels am Kraftfahrzeug dient, einer Servolenkeinrichtung (20) zum zusätzlichen Einleiten eines im Betrag variablen Servo-Moments an dem Lenkgetriebe (14) und einer Überlagerungslenkeinrichtung (60) zum Überlagern eines im Betrag variablen Überlagerungswinkels an dem Lenkgetriebe (14), wobei mit der Überlagerungslenkeinrichtung (60) die Funktion "Regelung des Radlenkwinkels" und mit der Servolenkeinrichtung (20) die Funktion "Regelung des Handmomentes" ausgeführt wird und die die Überlagerungslenkeinrichtung (60) mit einem Überlagerungsgetriebe (62) unter Beibehaltung einer mechanischen Koppelung zwischen der Lenkhandhabe (12) und dem Lenkgetriebe (14) gestaltet ist, während die Servolenkeinrichtung (20) einen dem Lenkgetriebe (14) zugeordneten Gleichlaufzylinder (22) aufweist, dem über ein Lenkventil (36) von einer von einem Antriebsaggregat (48) des Kraftfahrzeugs angetriebenen Pumpe (44) gefördertes Hydraulikfluid zuführbar ist,
**dadurch gekennzeichnet, dass** das Lenkventil (36) der nach dem Closed-Center-Prinzip arbeitenden Servolenkeinrichtung (20) in Mittelstellung des Lenkgetriebes (14) vollständig abgesperrt ist, während die bedarfsgerecht betreibbare und hierzu über eine betätigbare Kupplung mit dem Antriebsaggregat verbundene Pumpe (44) in einen Druckspeicher (54) fördern kann.

## Claims

1. A steering system (10) especially for a two-track motor vehicle comprising a steering handle (12) for selecting a manual torque of a driver of the motor vehicle at a steering gear (14), which is used to adjust a wheel steering angle at the motor vehicle, a power steering device (20) for additional introduction of a variable-amount servo torque at the steering gear (14) and an overlay steering device (60) for superimposing a variable-amount overlay angle at the steering gear (14), wherein the function "control of the wheel steering angle" is carried out with the overlay steering device (60) and the function "control of the manual torque" is carried out with the power assisted steering device (20) and the overlay steering device (60) is designed with an overlay gear (62) while maintaining a mechanical coupling between the steering handle (12) and the steering gear (14), while the power assisted steering device (20) has a synchronising cylinder (22) which is associated with the steering gear (14) and to which hydraulic fluid conveyed via a steering valve (36) by a pump (44) activated by a drive unit (48) of the motor vehicle can be supplied, **characterised in that** the steering valve (36) of the power assisted steering device (20) operating according to the closed centre principle is completely shut off in the central position of the steering gear (14), while the pump (44), which can be operated according to requirements and is connected for this purpose via an actuable coupling to the drive unit, can deliver into an accumulator (54).

## Revendications

1. Système de direction (10) pour un véhicule automobile, en particulier à double trace, comportant : une manette ou un volant de direction (12) prédéfinissant un couple manuel d'un conducteur du véhicule automobile sur un mécanisme de direction (14) qui sert à régler un angle de direction de roue sur le véhicule, un dispositif de direction assistée (20) introduisant un servocouple supplémentaire variable auprès du mécanisme de direction (14) ; et un dispositif de direction de superposition (60) pour superposer un angle de superposition variable sur le mécanisme de direction (14),
dans lequel le dispositif de direction de superposition (60) exécute une fonction "régulation de l'angle de direction de roue", et le dispositif de direction assistée (20) exécute une fonction "régulation du couple manuel", le dispositif de direction de superposition (60) comporte un mécanisme de superposition (62) tout en conservant un accouplement mécanique entre le volant de direction (12) et le mécanisme de direction (14), alors que le dispositif de direction assistée (20) comporte, associé au mécanisme de direction (14) un cylindre synchrone (22) recevant par l'intermédiaire d'une soupape de direction (36), un fluide hydraulique alimenté par une pompe (44) entraînée par un groupe moteur (48) du véhicule automobile,
**caractérisé en ce que**
la soupape de direction (36) du dispositif de direction assistée (20) fonctionnant suivant le principe du "closed-center" est complètement fermée dans la position centrale du mécanisme de direction (14), alors que la pompe (44) fonctionnant selon les besoins est à cette fin reliée au groupe moteur par l'intermédiaire d'un dispositif d'accouplement pouvant être actionné, pour alimenter un accumulateur de pression (54).
